# EUROPÄISCHE PATENTSCHRIFT

(11) **EP 1 851 468 B1**
(45) Veröffentlichungstag und Bekanntmachung des Hinweises auf die Patenterteilung: **14.11.2012**
(21) Anmeldenummer: 06724881.5
(22) Anmeldetag: 24.02.2006
(51) Int. Cl.: F16K 7/17, F16K 27/02

(54) **VENTILMODUL**
VALVE MODULE
MODULE DE SOUPAPE

(30) Priorität: 24.02.2005 DE 102005008923
(43) Veröffentlichungstag der Anmeldung: 07.11.2007
(73) Patentinhaber: MANN + HUMMEL GMBH, 71638 Ludwigsburg (DE)
(72) Erfinder: RODEWALDT, Thomas, 23923 Herrnburg (DE); THALMANN, Christian, 67346 Speyer (DE)
(86) Internationale Anmeldenummer: PCT/EP2006/060253
(87) Internationale Veröffentlichungsnummer: WO 2006/089945

(56) Entgegenhaltungen:
- EP-A- 0 274 781
- EP-A- 0 618 389
- EP-A- 1 230 990
- US-A- 4 385 639
- US-A- 4 516 604
- US-A- 5 657 786
- US-A- 6 073 905
- US-B1- 6 397 887
- US-B1- 6 401 756

## Beschreibung

### Technisches Gebiet

Die Erfindung betrifft eine Filtervorrichtung nach Anspruch 1.

### Stand der Technik

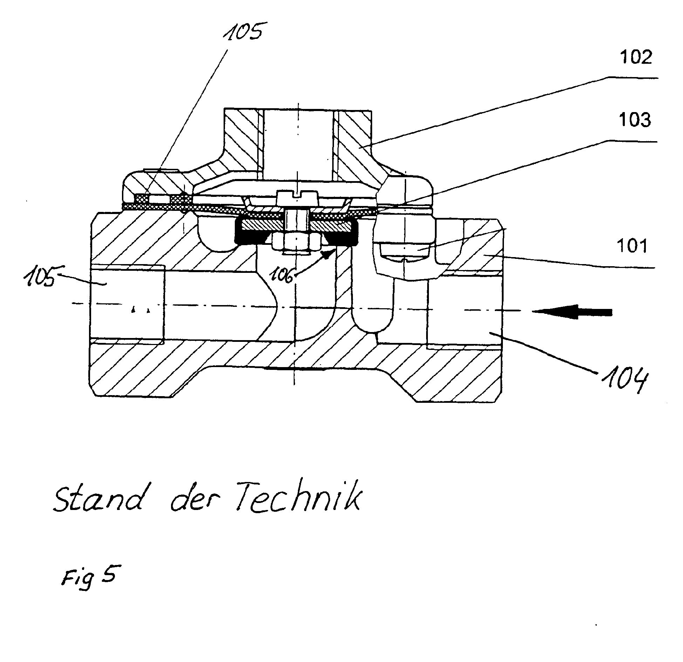

Ventilmodule sind aus dem Stand der Technik, wie beispielsweise der Schrift US6073905 bekannt, die eine Filteranordnung mit einem Reinigungssystem offenbart, bei dem ein einzelnes Ventil in einem separaten Gehäuse außerhalb der Filteranordnung angeordnet ist. Zum Reinigen der Filter wird von außen zugeführte Druckluft durch das Ventil entgegen der Filtrationsrichtung durch die Filteranordnung geleitet. Es sind ein Ein- und ein Auslasskanal vor und hinter dem Ventil gezeigt, durch welches das Fluid strömt.
Die Schrift US4516604 zeigt einen Ventilblock mit mehreren integrierten Drei- und Vierwege-Ventilen und den zugehörigen Strömungskanälen.
In der Anmeldung EP0274781A2 wird ein System zur Regeneration von komprimierter Luft beschrieben. In einem mehrteiligen Gehäuseblock sind Ventile, Fluidkanäle, und ein Filtergehäuse angeordnet. Das Filtergehäuse ist ebenso wie die Ventile im Gehäuseblock integriert.
Die Patentschrift US4385639 beschreibt eine Ventilanordnung in einem Gehäuse mit darin angeordneten Strömungskanälen ohne Rein- und Rohluftkanäle auf zwischen denen ein Filterelement angeordnet ist.
In dem Dokument US5657786 ist ebenfalls eine Ventilanordnung für ein Gas in einem Gehäuse mit darin angeordneten Strömungskanälen zur Verteilung eines Gases offenbart.
Dem Dokument EP1230990 A2 ist eine Ventilanordnung zur Reinigung eines Rohrleitungssystems für eine sterile Verarbeitung von Lebensmitteln zu entnehmen. Die Reinigung erfolgt dabei über ein Desinfektionsfluid.
Die Patentschrift US6401756B1 offenbart einen Ventilblock mit Ein- und Ausströmung, der speziell angeordnet werden kann und aufgrund einer besonderen Gestaltung leicht zu reinigen und zu desinfizieren ist.
Das Patent US6397887B1 beschreibt ein mehrteiliges Ventilgehäuse mit einem Hauptstrom, von dem ein Nebenstrom abzweigt, der mit einem Ventil regelbar gestaltet ist.
Der Schrift EP0618389A1 ist ein mehrteiliges Ventilgehäuse zur ventilgesteuerten Aufteilung des Hauptstromes in zwei Ströme zu entnehmen.
Es sind im Stand der Technik zudem Membranventile bekannt, welche zur Steuerung eines Fluidstromes vorgesehen sind. Ein Beispiel für derartige Membranventile ist in Figur 5 gezeigt. Die nachfolgenden Bezugszeichen beziehen sich auf diese Figur. Das Membranventil weist ein Ventilgehäuse 101 auf, an welchem eine Membran 103 befestigt ist. Über der Membran 103 ist ein Ventilgehäusedeckel 102 angeordnet, welcher dichtend mit der Membran 103 verbunden ist. In dem Ventilgehäuse 101 sind ein Einlass 104 und ein Auslass 105 angeordnet, wobei der Einlass 104 unterhalb eines vorgegebenen Druckniveaus durch die Membran 103 dichtend von dem Auslass 105 getrennt ist. Beim Überschreiten des vorgegebenen Druckniveaus hebt die Membran 103 von einem, an dem Ventilgehäuse 101 angeordneten Ventilsitz 106 ab. Dadurch kann das Fluid von dem Einlass 104 zu dem Auslass 105 strömen. Das Membranventil ist mit Fluidleitungen verbunden, welche das Fluid dem Membranventil zu- bzw. ableiten. Dieses Membranventil verfügt über einen relativ großen Platzbedarf, da das Fluid durch das Ventilgehäuse 101 geleitet wird.

Aufgabe der Erfindung ist es, eine Filtervorrichtung zur Reinigung eines Fluids zu schaffen, welche über einen geringen Bauraumbedarf verfügt und kostengünstig ist. Diese Aufgabe wird durch die Filtervorrichtung gemäß Anspruch 1 gelöst.

### Offenbarung der Erfindung

Die erfindungsgemäße Filtervorrichtung dient der Reinigung eines Fluids, insbesondere eines Prozessfluids. Prozessfluide im Sinne dieser Patentanmeldung sind Gase oder Flüssigkeiten, welche z.B. bei der spanabhebenden Bearbeitung von Werkstücken oder Herstellung von Produkten erforderlich sind. Beispielsweise kann das Prozessfluid ein Luftstrom oder ein Kühl- bzw. Schmiermittel sein, welche abgetragenes Material von dem Werkstück entfernen und/oder das Werkzeug schützen. Die Filtervorrichtung verfügt über ein oben beschriebenes Ventilmodul, einen Behälter, einen Rohfluid-Anschluss und einen Reinfluid-Anschluss. In dem Behälter ist mindestens ein Filtereinheitenstapel angeordnet, welcher mit dem Ventilmodul verbunden ist. Durch die Ventile sind die Filtereinheitenstapel einzeln ansteuerbar. Das Ventilmodul dient zur Steuerung eines Fluidstromes, insbesondere eines zu reinigenden Flüssigkeitsstromes. Das Ventilmodul weist ein Ventil mit einem Ventildeckel, einem Ventilkörper und einem Ventilsitz auf. Der Ventilkörper korrespondiert mit dem Ventilsitz, welcher in eine Adapterplatte integriert ist. Der Ventilkörper und der Ventildeckel sind mit der Adapterplatte verbunden, wobei die Adapterplatte über einen Einlass und einen Auslass verfügt. Innerhalb der Adapterplatte sind ein Rohkanal und ein Reinkanal angeordnet. Der Ventilkörper kann beliebig, z.B. als Kugel oder Platte, ausgeführt sein. Da die Adapterplatte den Ventilsitz bildet, kann ein Ventilunterteil eingespart werden. Dadurch wird einerseits Bauraum eingespart und andererseits wird die Strömungsführung vereinfacht, da der Fluidstrom ohnehin in der Adapterplatte geführt wird.

Gemäß einer Weiterbildung der Erfindung ist der Ventilsitz in die Adapterplatte eingepresst. Hierbei kann für den Ventilsitz ein anderes Material als für die Adapterplatte gewählt werden. Weiterhin kann der Ventilsitz auf anderen Maschinen bearbeitet werden, als die Adapterplatte.

Bei einer weiteren Ausgestaltung der Erfindung ist der Ventilkörper eine elastische Membran. Diese kann über unterschiedliche Bereiche verfügen. Vorzugsweise verfügt die Membran über eine Randzone, welche mit der Adapterplatte verbunden ist, wodurch eine exakte Positionierung der Membran erreicht und ein Verrutschen verhindert wird.

Es ist vorteilhaft, wenn die Adapterplatte im Bereich des Reinkanals über ein Ventil verfügt, mit welchem der Reinkanal verschließbar ist. Somit kann der Reinkanal bei Bedarf verschlossen bzw. geöffnet werden. Dies ist beim Wechsel von Anschlussteilen vorteilhaft.

Gemäß einer weiteren Ausgestaltung der Erfindung verfügt die Adapterplatte im Bereich des Rohkanals über ein Ventil, wobei der Rohkanal mit dem Ventil verschließbar ist. Somit können nachfolgende Komponenten gewechselt werden, ohne dass das Fluid aus der gesamten Vorrichtung austritt.

Bei einer Weiterbildung der Erfindung verfügt der Reinkanal über mindestens zwei parallel angeordnete Ventile, welche zwei voneinander getrennte Kanäle unabhängig voneinander verschließen bzw. öffnen. Somit kann bei Bedarf nur ein einzelner Kanal bzw, alle Kanäle durchströmt werden. Dies ist besonders für die Durchströmung nachfolgend angeordneter Bauteile von Bedeutung.

### Kurze Beschreibung der Zeichnungen

Weitere Einzelheiten der Erfindung werden nachfolgend anhand der schematischen Figuren erläutert. Hierbei zeigt

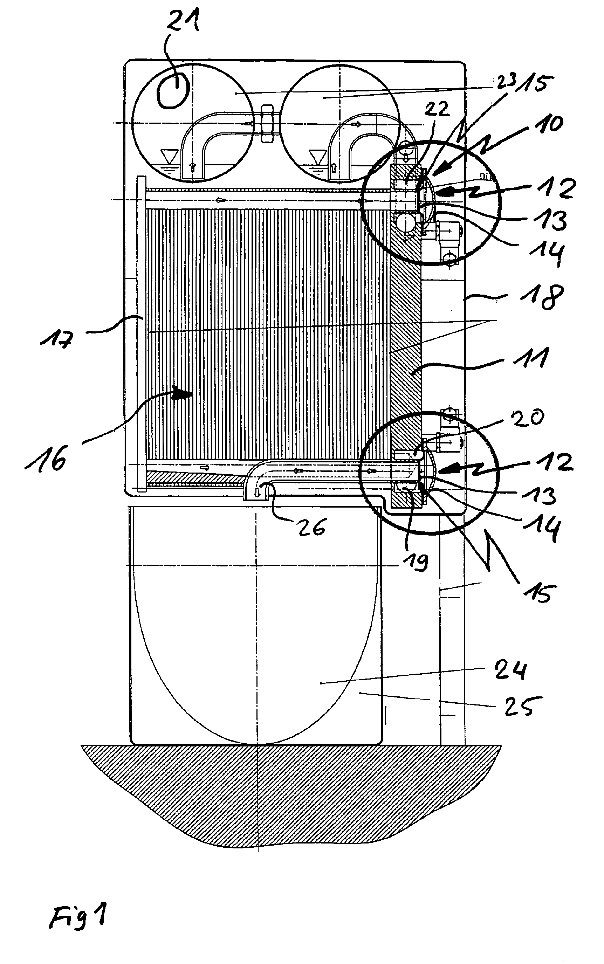

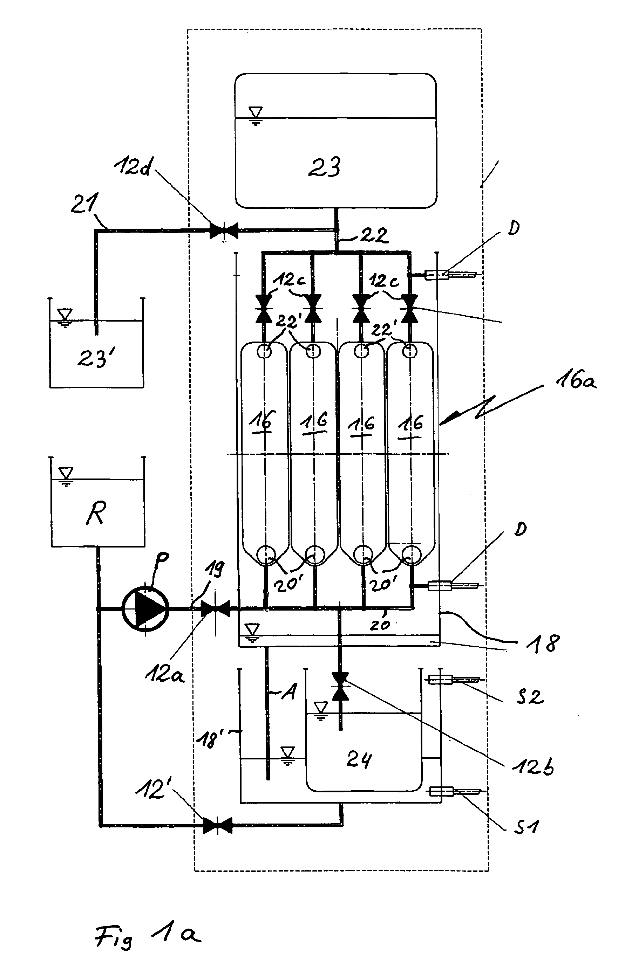

Figur 1 eine Filtervorrichtung,

Figur 1 a eine Filtervorrichtung in schematischer Darstellung

Figur 2 eine Adapterplatte im Schnitt,

Figur 3 ein Ventil im Reinkanal gemäß Schnittlinie A-A,

Figur 4 ein Ventil im Rohkanal gemäß Schnittlinie B-B und

Figur 5 ein im Stand der Technik bekanntes Membranventil.

In Figur 1 ist eine Filtervorrichtung schematisch dargestellt. Die Filtervorrichtung verfügt über ein Ventilmodul 10, welches durch eine Adapterplatte 11 und Ventile 12 gebildet ist. Die Ventile 12 verfügen über eine Membran 13 und einen Ventildeckel 14. Die Membran 13 und der Ventildeckel 14 sind mit der Adapterplatte 11 verbunden. Die Membran 13 kontaktiert einen Ventilsitz 15, welcher einteilig mit der Adapterplatte 11 ausgeführt ist. An die Adapterplatte 11 schließt ein Filtereinheitenstapel 16 an, welcher aus einzelnen Filtereinheiten, wie sie im Stand der Technik bekannt sind, zusammengesetzt ist. Zur Erhöhung der Filterfläche können auch mehrere Filtereinheitenstapel 16 parallel angeordnet sein. Diese ergeben ein Filtereinheitenmodul 16a. Die Filtereinheiten verfügen über ein Filtermedium, einen Roh- und einen Reinkanal. Der Filtereinheitenstapel 16 ist an der, der Adapterplatte 11 gegenüberliegend angeordneten Seite mit einer Spannplatte 17 verschlossen. Die gesamte Einheit aus Ventilmodul 10, Filtereinheitenstapel 16 und Spannplatte 17 ist in einem Behälter 18 angeordnet. Der Rohfluid-Anschluss 19, mündet in einen Rohkanal 20 in der Adapterplatte 11. Durch den Rohfluid-Anschluss 19 ist das zu reinigende Fluid in die Filtervorrichtung einbringbar. Weiterhin verfügt die Adapterplatte 11 über einen Reinkanal 22, welcher mit einem Sammelbehälter 23 verbunden ist. Das gereinigte Fluid wird aus der Filtervorrichtung abgeleitet. Ein Teil des Fluids wird in dem Sammelbehälter 23 gespeichert, bis es zur Rückspülung der Filtereinheiten benötigt wird. Zum Entfernen des Reinfluids kann das Reinfluid-Anschluss 21 verwendet werden, durch welchen das Fluid angesaugt werden kann. Alternativ hierzu kann jedoch auch ein Wechsel der Sammelbehälter 23 erfolgen.

Unterhalb des Behälters 18 ist ein Filterbeutel 24 angeordnet, welcher in einer Schublade 25 angeordnet ist. In den Filterbeutel 24 mündet ein Konzentrat-Ablauf 26, welcher mit dem im Rohkanal 20 angeordneten Ventil 12 verschließbar ist.

Das zu reinigende Fluid strömt durch den Rohfluid-Anschluss 19 in die Adapterplatte 11 ein. Das Ventil 12 im Rohkanal 20 ist geschlossen, wodurch das Fluid durch die Filtereinheitenstapel 16 strömt. Die Ventile 12 im Reinkanal 22 sind geöffnet, wodurch das Reinfluid durch den Reinkanal 22 in die Sammelbehälter 23 strömt. Nach einer definierten Zeitspanne, bzw. bei Bedarf, können die Filtereinheiten der Filtereinheitenstapel 16 regeneriert werden. Hierzu wird das Ventil 12 im Reinkanal 22 der zu reinigenden Filtereinheitenstapel 16 geöffnet und die Ventile 12 der nicht zu regenerierenden Filtereinheitenstapel 16 geschlossen. Das Ventil 12 im Rohkanal 20 wird geöffnet. Das Reinfluid trifft auf die Filtereinheiten auf und durchströmt diese in entgegengesetzter Strömungsrichtung. Dadurch werden die Ablagerungen auf der Anströmseite der Filtereinheit abgelöst und durch den Konzentrat-Ablauf in den Filterbeutel 24 gespült. Nach dem Rückspülvorgang schließt das Ventil 12 im Rohkanal 20 wieder und die Filtervorrichtung ist zur Reinigung von Rohfluid wieder bereit. Die Ventile 12 sind mit einem Steuerfluid, insbesondere Druckluft, ansteuerbar. Zwischen der Membran 13 und dem Ventildeckel 14 wird das Steuerfluid eingebracht, wobei der Druck ausreichend ist, dass die Membran 13 im Normalbetrieb nicht von dem Ventilsitz 15 abgehoben wird. Wenn das Ventil 12 geöffnet werden soll, wird der Druck durch das Steuerfluid reduziert und somit hebt die Membran 13 von dem Ventilsitz 15 ab.

In Figur 1a ist eine Filtervorrichtung gemäß Figur 1 schematisch dargestellt. Die Filtervorrichtung verfügt über einen Behälter 18, in welchem ein Filtereinheitenmodul 16a mit vier Filtereinheitenstapel 16 angeordnet ist. Das Filtereinheitenmodul 16a verfügt über einen Rohfluid-Anschluss 19, welcher mit einem Ventil 12a öffen- und verschließbar ist. Der Rohfluid-Anschluss 19 ist mit dem Rohkanal 20' jedes Filtereinheitenstapels 16 verbunden. Die Reinkanäle 22' der Filtereinheitenstapel 16 sind mit einem Reinkanal 22 verbunden, wobei jeder Filterinheitenstapel 16 mit einem gesonderten Ventil 12c öffen- und verschließbar ist. Der Reinkanal 22 mündet einerseits in einen Sammelbehälter 23 und andererseits in einen Reinbehälter 23', wobei der Reinbehälter 23' mit einem Ventil 12d von der Reinfluidleitung 22 getrennt werden kann. Der Rohfluid-Anschluss 19 ist mit einem Rohbehälter R verbunden, wobei eine Pumpe P vorgesehen ist. um das zu reinigende Fluid in das Filtereinheitenmodul 16a zu drücken. Weiterhin ist der Rohfluid-Anschluss 19 mit einem Konzentratablauf 26 verbunden, welcher in einen Filterbeutel mündet. Der Konzentratablauf 26 ist über ein Ventil 12b öffen- und verschließbar.

Der Behälter 18 verfügt über eine Ablaufleitung A, welche in einen weiteren Behälter 18' mündet. Der Behälter 18' ist mit einem Rohbehälter R verbunden, wodurch das in dem Behälter 18' aufgefangene Fluid durch öffnen des Ventils 12' in den Rohbehälter R rückführbar ist.

Zur Erfassung des Flüssigkeitspegels in dem Behälter 18' ist ein Sensor S1 zur Erfassung eines Mindestregelstandes und ein Sensor S2 zur Erfassung eines Maxiamalpegelstandes vorgesehen. Sobald der Flüssigkeitspegel durch den Sensor S2 erfasst wird, wird das Ventil 12' geöffnet. Nach dem Unterschreiten des Pegels bei S1, wird das Ventil 12' wieder geschlossen.

Das zu reinigende Fluid befindet sich im Rohbehälter R. Von dort wird es bei geöffnetem Ventil 12a über den Rohfluid-Anschluss 19 in das Filtereinheitenmodul 16a gepumpt. In diesem Zustand ist das Ventil 12b geschlossen. Mindestens eines der Ventile 12c ist geöffnet, so dass das Reinfluid durch den Reinkanal 22 aus dem Filtereinheitenmodul 16a austreten kann. Das Reinfluid strömt in den Sammelbehälter 23 bzw. bei geöffnetem Ventil 12d in den Reinbehälter 23', von wo aus es seiner weiteren Nutung zugeführt wird. Wenn einer oder mehrere der Filtereinheitenstapel 16 verschmutzt ist/sind, wird das Ventil 12d geschlossen und das jeweilige Ventil 12c geöffnet, damit eine Rückspülung des Filtereinheitenstapels 16a erfolgen kann. Hierbei wird dann auch das Ventil 12a geschlossen und das Ventil 12b in dem Konzentrat Ablauf 26 geöffnet. Das verschmutzte Rückspülfluid wird in dem Beutel 24 gesammelt. Wenn das in dem Filtereinheitenmodul 16a enthaltene Fluid nicht mehr weiter gereinigt werden kann, so wird das Fluid über den Konzentrat-Ablauf 12b aus dem Filtereinhietenmodul entfernt. Wenn der Beutel 24 voll ist, wird er ausgetauscht oder entleert. Das Konzentrat wird dann entsorgt. Da die Filtereinhieten der Filtereinheitenstapel 16 nur aufeinander verpresst sind, können geringe Leckagen auftreten. Diese werden dann in dem Behälter 18 gesammelt und über die Ablaufleitung A aus dem Behälter 18 entfernt.

Sowohl in dem Reinkanal 22, als auch in dem Rohkanal 20 ist jeweils ein Druckschalter D angeordnet, welcher das Druckniveau in dem jeweiligen Kanal erfasst.

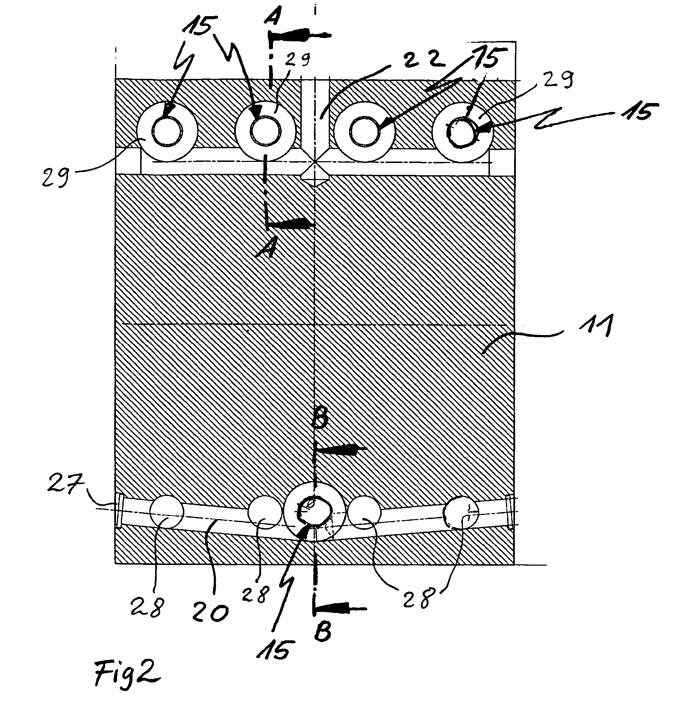

In Figur 2 ist eine Adapterplatte 11 im Schnitt dargestellt. Der Figur 1 entsprechende Bauteile sind mit gleichen Bezugszeichen versehen. In der Adapterplatte 11 ist der Rohkanal 20 durch zwei schräg zur Mitte nach unten verlaufende Bohrungen dargestellt, wobei eine Bohrung von außen verschlossen wird. Die andere Bohrung bildet einen Einlass 27, durch welchen das zu reinigende Fluid in die Adapterplatte 11 eingeleitet wird. Der Rohkanal 20 verfügt über Verteilerbohrungen 28, welche derart angeordnet sind, dass sie mit den Filtereinheitenstapeln 16 korrespondieren. Weiterhin ist die Anzahl der Verteilerbohrungen 28 an die Anzahl der Filtereinheitenstapel 16 angepasst, wodurch jeder Flitereinheitenstapel 16 über eine eigene Verteilerbohrung verfügt. In der Mitte, wo sich die beiden Bohrungen treffen, ist der Ventilsitz 15 für das im Rohkanal 20 vorgesehene Ventil 12 angeordnet.

Der Reinkanal 22 ist ebenfalls durch eine Bohrung gebildet, wobei auf eine horizontal verlaufende Bohrung eine vertikal verlaufende Bohrung auftrifft. Durch die vertikale Bohrung tritt das gereinigte Fluid aus der Adapterplatte 11 wieder aus. In der horizontal verlaufenden Bohrung sind Öffnungen 29 angeordnet, welche in ihrer Anzahl der Anzahl an Filtereinheitenstapel 16 entsprechen. In jeder dieser Öffnungen 29 ist ein Ventilsitz 15 für ein Ventil 12 angeordnet. Weiterhin ist die horizontal verlaufende Bohrung im Betrieb an ihren Stirnseiten verschlossen.

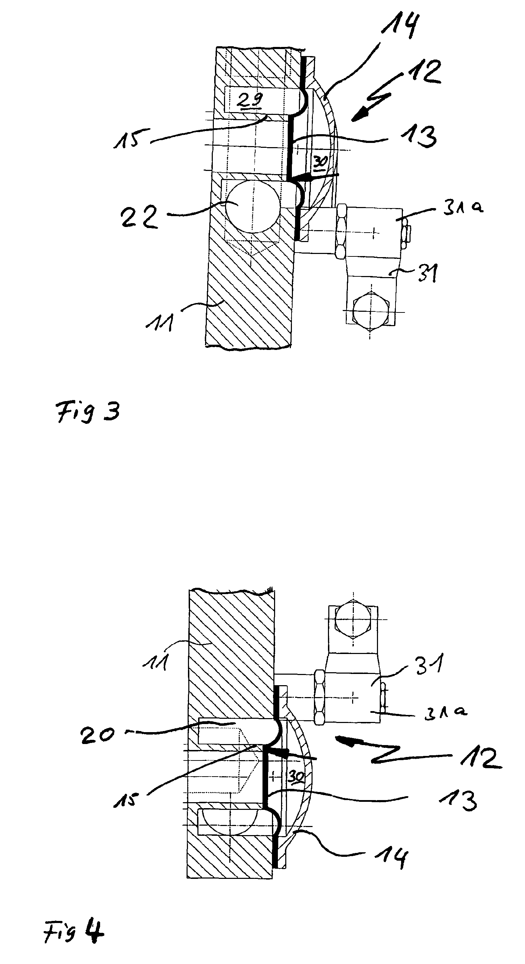

In Figur 3 ist ein Ventil 12 im Reinkanal 22 entlang Schnittlinie A-A und in Figur 4 ist ein Ventil 12 im Rohkanal 20 entlang Schnittlinie B-B gemäß Figur 2 dargestellt. Der Aufbau der Ventile 12 ist bei beiden Figuren gleich. Der Figur 1 bzw. 2 entsprechende Bauteile sind mit gleichen Bezugszeichen versehen. Die Membran 13 und der Ventildeckel 14 sind dichtend miteinander und mit der Adapterplatte 11 verbunden. Zwischen der Membran 13 und dem Ventildeckel 14 ist ein Steuerraum 30 gebildet, welcher über einem Magnetventil 31a mit einer Steuerfluidleitung 31 verbunden ist. Durch die Steuerfluidleitung 31 ist ein Steuerfluid in den Steuerraum 30 mittels des Magnetventils 31a einleitbar, wobei der in dem Steuerraum 30 erforderliche Steuerdruck an den jeweiligen Betriebszustand des Ventils 12 angepasst werden kann. Beim Schließen bzw. Geschlossenhalten des Ventils 12 ist ein höherer Steuerdruck erforderlich, als beim Öffnen des Ventils 12.

## Patentansprüche

1. Filtervorrichtung zur Reinigung eines Fluids, umfassend ein Ventilmodul zur Steuerung des zu reinigenden Flüssigkeitsstromes, einen Behälter (18), einen Rohfluid-Anschluss (19), einen Reinfluid-Anschluss (21) und mindestens einen in dem Behälter (18) angeordneten Filtereinheitenstaper (16), welcher mit dem Ventilmodul verbunden ist, wobei das Ventilmodul ein Ventil (12) mit einem Ventildeckel (14), einem Ventilkörper (13) und einem Ventilsitz (15) aufweist, wobei der Ventilkörper (13) mit dem Ventilsitz (15) korrespondiert und der Ventilsitz (15) in eine Adapterplatte (11) integriert ist, wobei der Ventilkörper (13) und der Ventildeckel (14) mit der Adapterplatte (11) verbunden sind, wobei die Adapterplatte (11) über einen Einlass (27) und einen Auslass verfügt und innerhalb der Adapterplatte (11) ein Rohkanal (20) und ein Reinkanal (22) angeordnet sind, durch die der Fluidstrom in der Adapterplatte (11) geführt ist, wobei ein Filtereinheitenstapel (16) mit dem Ventilmodul so verbunden ist, dass der Filtereinheitenstapel (16) zwischen Rohkanal (20) und Reinkanal (22) angeordnet ist, wobei durch die Ventile (12) die Filtereinheitenstaper (16) einzein ansteuerbar sind.

2. Filtervorrichtung nach Anspruch 1, **dadurch gekennzeichnet, dass** der Ventilsitz (15) in die Adapterplatte (11) eingepresst ist.

3. Filtervorrichtung nach einem der Ansprüche 1 oder 2, **dadurch gekennzeichnet, dass** der Ventilkörper (13) eine elastische Membran ist.

4. Filtervorrichtung nach einem der vorangehenden Ansprüche, **dadurch gekennzeichnet, dass** die Adapterplatte (11) im Bereich des Reinkanals (22) über ein Ventil (12) verfügt, mit welchem der Reinkanal (22) verschließbar ist.

5. Filtervorrichtung nach einem der vorangehenden Ansprüche, **dadurch gekennzeichnet, dass** die Adapterplatte (11) im Bereich des Rohkanals (20) über ein Ventil (12) verfügt, wobei der Rohkanal (20) mit dem Ventil (12) verschließbar ist.

6. Filtervorrichtung nach Anspruch 5, **dadurch gekennzeichnet, dass** der Reinkanal (22) über mindestens zwei parallel angeordnete Ventile (12) verfügt, welche zwei voneinander getrennte Kanäle unabhängig voneinander verschließen bzw. öffnen.

## Claims

1. Filter device for cleaning a fluid, comprising a valve module for controlling the fluid flow to be cleaned, a reservoir (18), a raw-fluid connection (19), a clean-fluid connection (21) and at least a filter unit pile (16) disposed in the reservoir (18) and connected with the valve module, the valve module featuring a valve (12) with a valve cover (14), a valve body (13) and a valve seat (15), the valve body (13) corresponding with the valve seat (15) and the valve seat (15) being integrated into an adapter plate (11), the valve body (13) and the valve cover (14) being connected with the adapter plate (11), the adapter plate (11) having an inlet (27) and an outlet and a raw channel (20) and a clean channel (22) through which the fluid flow is led in the adapter plate (11) being disposed in the adapter plate (11), a filter unit pile (16) being connected with the valve module in such a way that the filter unit pile (16) is disposed between the raw channel (20) and the clean channel (22), the filter unit piles (16) being controlled individually by the valves (12).

2. Filter device according to claim 1, **characterized in that** the valve seat (15) is pressed into the adapter plate (11).

3. Filter device according to one of the claims 1 or 2, **characterized in that** the valve body (13) is a resilient membrane.

4. Filter device according to one of the above claims, **characterized in that** the adapter plate (11) has, in the area of the clean channel (22), a valve (12) by means of which the clean channel (22) can be closed.

5. Filter device according to one of the above claims, **characterized in that** the adapter plate (11) has, in the area of the raw channel (20), a valve (12), the raw channel (20) being closed by the valve (12).

6. Filter device according to claim 5, **characterized in that** the clean channel (22) has at least two valves disposed in parallel which open or close, independently from each other, two channels separated from each other.

## Revendications

1. Dispositif à filtre destiné au nettoyage d'un fluide, comprenant un module à soupape pour la commande du flux de fluide à nettoyer, un récipient (18), un raccord de fluide brut (19), un raccord de fluide pur (21) et au moins une pile d'unités à filtre (16) disposée dans le récipient (18) et reliée au module à soupape, le module à soupape présentant une soupape (12) avec un couvercle de soupape (14), un corps de soupape (13) et un siège de soupape (15), le corps de soupape (13) correspondant avec le siège de soupape (15) et le siège de soupape (15) étant intégré dans une plaque adaptatrice (11), le corps de soupape (13) et le couvercle de soupape (14) étant reliés à la plaque adaptatrice (11), la plaque adaptatrice (11) étant dotée d'une entrée (27) et d'une sortie et un canal brut (20) et un canal pur (22) étant disposés au sein de la plaque adaptatrice (11), à travers lesquels le flux de fluide est acheminé dans la plaque adaptatrice (11), une pile d'unités à filtre (16) étant reliée au module à soupape de sorte que la pile d'unités à filtre (16) soit placée entre le canal brut (20) et le canal pur (22), les piles d'unités à filtre (16) pouvant être pilotées de façon individuelle par les soupapes (12).

2. Dispositif à filtre selon la revendication 1, **caractérisé en ce que** le siège de soupape (15) est pressé dans la plaque adaptatrice (11).

3. Dispositif à filtre selon l'une des revendications 1 ou 2, **caractérisé en ce que** le corps de soupape (13) est une membrane élastique.

4. Dispositif à filtre selon l'une des revendications précédentes, **caractérisé en ce que** la plaque adaptatrice (11) dispose, dans la zone du canal pur (22), d'une soupape (12) au moyen de laquelle le canal pur (22) peut être fermé.

5. Dispositif à filtre selon l'une des revendications précédentes, **caractérisé en ce que** la plaque adaptatrice (11) dispose d'une soupape (12) dans la zone du canal brut (20), le canal brut (20) pouvant être fermé avec la soupape (12).

6. Dispositif à filtre selon la revendication 5, **caractérisé en ce que** le canal pur (22) est doté d'au moins deux soupapes (12) montées en parallèle qui ferment ou ouvrent, indépendamment l'un de l'autre, deux canaux séparés l'un de l'autre.
